# EUROPEAN PATENT APPLICATION

(11) **EP 4 343 656 A1**
(43) Date of publication of application: **27.03.2024**
(21) Application number: 23195031.2
(22) Date of filing: 04.09.2023
(51) Int. Cl.: G06Q 20/18, G06Q 20/20, G07G 3/00

(54) **SALES DATA PROCESSING APPARATUS AND PAYMENT APPARATUS**

(30) Priority: 26.09.2022 JP 2022152213
(71) Applicant: Toshiba Tec Kabushiki Kaisha, Shinagawa-ku Tokyo 141-8562 (JP)
(72) Inventor: Takasu, Takuya, Tokyo 141-8562 (JP)
(74) Representative: Bandpay & Greuter

(57) **Abstract**

According to an embodiment, a sales data processing apparatus includes a camera positioned to acquire images of a region around the sales data processing apparatus and a user input unit permitting a user to operate the sales data processing apparatus. A controller is configured to perform registration processing on items in a sales transaction, acquire a first image from the camera, acquire a second image from the camera after the first image, and then acquire an image analysis comparing the first image to the second image to determine whether the camera has shifted position between the acquisition of the first image and the second image. If the camera has shifted between the acquisition of the first image and the second image, the controller performs countermeasure processing, such as pausing the sales data processing, issuing a warning notification, or attempting to return the camera to the previous position.

## Description

### FIELD

Embodiments of the present disclosure relate to a sales data processing apparatus and a payment apparatus for retail stores and the like.

### BACKGROUND

In the related art, there have been point of sales (POS) terminals of a self-service type with which a shopper performs operations related to the registration processing and the settlement processing of the registered commodities by himself or herself and POS terminals of a semi-self-service type with which a shopper performs the operations related to the settlement processing by himself or herself after commodity registration. Some of such POS terminals include a camera acquires images of the operator during processing, making it possible to find operation errors or fraudulent acts based on the images output by the camera. Such a camera is often positioned to provide imaging from above a main housing of the POS terminal (overhead images), especially, when the camera is not built inside the main housing. In some examples, the camera may be configured such that an imaging direction can be appropriately adjusted.

A malicious customer or the like may sometimes change the orientation of such a camera so as not to have his/her fraudulent act exposed. In addition, it is conceivable that the orientation of the camera may sometimes be shifted due to an earthquake or the like.

To this end, a sales data processing apparatus, a payment apparatus and a sales data processing method according to appended claims are provided.

### BRIEF DESCRIPTION OF THE DRAWINGS

FIG. 1 is a perspective view of a self-service POS terminal according to an embodiment as viewed from an operator side.
FIG. 2 is a diagram a self-service POS terminal according to an embodiment.
FIG. 3 is a diagram illustrating functional aspects of a self-service POS terminal and a server according to an embodiment.
FIG. 4 is a diagram illustrating an example of a captured image of a camera according to an embodiment.
FIG. 5 is a diagram illustrating another example of a captured image of a camera according to an embodiment.
FIG. 6 is a flowchart of processing executed by a self-service POS terminal according to an embodiment.

### DETAILED DESCRIPTION

The present disclosure describes a sales data processing apparatus and a payment apparatus providing a technological solution for preventing the occurrence of inconvenience in sales data processing when imaging content from a camera for detecting an operation error or a fraudulent act is abnormal.

According to one embodiment, a sales data processing apparatus includes a camera positioned to acquire images of a region in which a user of the sales data processing apparatus operates the sales data processing apparatus, a user input unit permitting the user to operate the sales data processing apparatus, and a controller. The controller is configured to: perform registration processing on items in a sales transaction based on item information acquired by the controller; acquire a first image from the camera as a reference image; acquire a second image from the camera after the first image; acquire an image analysis comparing the first image to the second image to determine whether an imaging range of the camera has shifted between the acquisition of the first image and the second image; and perform a countermeasure processing if the image analysis indicates the imaging range has shifted between the acquisition of the first image and the second image.

### First Embodiment

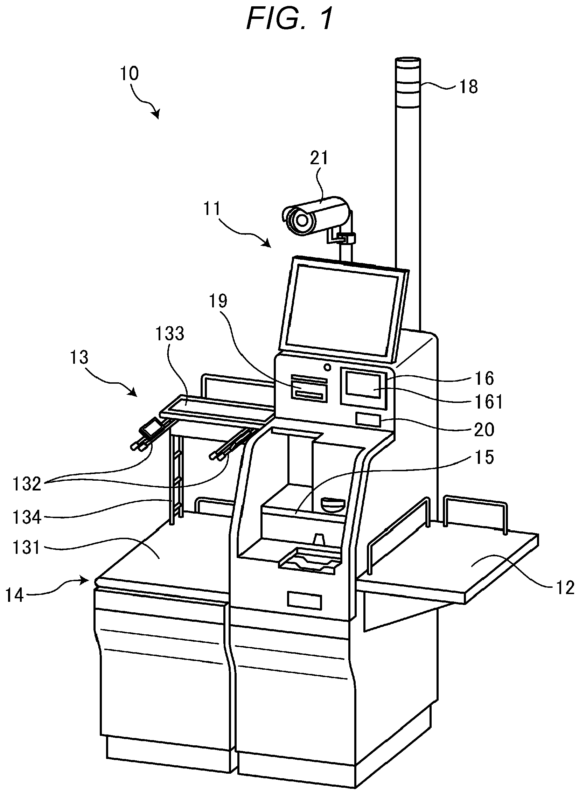

An embodiment will be described with reference to the drawings. FIG. 1 is a perspective view illustrating an example of an external appearance of a self-service POS terminal 10 according to the first embodiment. Fig. 1 provides the view from an operator side.

The self-service POS terminal 10 is a self-service point of sales (POS) terminal at which a shopper performs processing related to both registration and settlement of commodities.

Relevant aspects of the present embodiment can also be applied to a semi-self-service-type POS terminal (an example of a payment apparatus) at which a shopper performs an operation related just to settlement processing after commodity registration has been otherwise performed using a different apparatus. In such an example, the registration processing that occurs prior to the settlement processing can be performed by a store clerk at a standard POS terminal. In some embodiments, the registration processing may be performed by the shopper himself/herself at or with a different apparatus. For example, the shopper may perform registration of commodities by operation of a POS application activated on a smartphone possessed by the shopper or by operation of a cart POS (a POS-type terminal attached to a shopping cart provided by the store).

The self-service POS terminal 10 includes a main body 11, a basket placement stand 12, and a bag filling stand 13. The main body 11 is provided between the basket placement stand 12 and the bag filling stand 13. The basket placement stand 12 is a stand for placing a basket or the like holding a commodity to be registered in the transaction. The bag filling stand 13 is a stand to which a shopping bag can be hooked in an open state. A registered commodity is to be put into the shopping bag or at least on the bag filling stand 13.

The bag filling stand 13 includes a base 131, a bag hook 132, and a temporary placement stand 133. The bag hook 132 and the temporary placement stand 133 are supported by a support 134 provided on the base 131, and are provided above the base 131. The bag hook 132 is a hook for hanging a bag into which a registered commodity is to be put. The base 131 is a base on which the bottom of a bag is supported, or on which, for example, a commodity that is larger than a bag and is not suitable for being put into the bag is placed. The temporary placement stand 133 is a stand on which a commodity requiring attention in bag filling can be temporarily placed for reasons such as preferred packing/bagging order (e.g., fragile items are generally placed last into a bad so as to be on top of other items).

The self-service POS terminal 10 further includes a measuring section 14, a cash reception and discharge section 15 (currency handling unit), a scanner 16, a touch panel display 17, an indicator lamp 18, a card reader 19, a printer 20, and a camera 21.

The measuring section 14 is provided on the bag filling stand 13. The measuring section 14 measures a weight of an article (e.g., a registered commodity) placed on the bag filling stand 13. The measuring section 14 outputs the measured weight of items placed on the bag filling 13 based on an output of a built-in weight sensor. For example, the measuring section 14 measures a total weight of the bag set on the bag filling stand 13, the commodities contained in the bag, and the like. The weight sensor is provided, for example, below the base 131 to support the base 131, and outputs a signal corresponding to a load received by the base 131.

The cash reception and discharge section 15 is provided, for example, at a central portion of the main body 11 in an up-down direction. The cash reception and discharge section 15 receives input of coins or bills paid by the shopper and discharges coins or the like. If the self-service POS terminal 10 is configured as a cashless terminal that does not handle cash, the cash reception and discharge section 15 need not be provided.

The scanner 16 is provided in an upper portion of the main body 11. The scanner 16 includes a reading window 161. The scanner 16 reads commodity information from a wireless tag or a code symbol such as a bar code attached to a commodity held over the reading window 161, for example. In this context, a wireless tag is an electronic tag such as a radio frequency (RF) tag (RFID tag). The wireless tag includes an integrated circuit (IC) chip for storing information and an antenna. The wireless tag transmits tag information stored in the IC chip according to radio waves received from a wireless tag reading apparatus. For example, the wireless tag stores commodity information regarding a commodity to which the wireless tag is attached. The commodity information includes, for example, a commodity code enabling identification of a commodity.

The scanner 16 may comprise, for example, a camera configured to image a commodity held over the reading window 161. The camera of the scanner 16 includes an imaging element such as a complementary metal-oxide semiconductor (CMOS) or a charge coupled device (CCD). The reading window 161 is capable of transmitting light to be captured by the camera of the scanner 16. Image data of a commodity imaged by the camera of the scanner 16 can be used for object recognition processing. Accordingly, the commodity included in the image data can be specified (identified) and registered accordingly. An image processing apparatus, which can be an external device communicably connected to the self-service POS terminal 10 via, for example, a communication interface (I/F), may be used for the object recognition processing. In other examples, object recognition processing may be executed by the self-service POS terminal 10 itself.

The touch panel display 17 is provided, for example, above the main body 11. The touch panel display 17 displays various types of information for an operator on a screen and receives an input operation from a shopper (as operator).

The indicator lamp 18 is provided, for example, behind the main body 11. The indicator lamp 18 is an electric lamp that notifies a store clerk that, for example, an abnormality has occurred at the self-service POS terminal 10.

The card reader 19 is provided, for example, on a side of the scanner 16 in the main body 11. The card reader 19 reads information stored in a card such as a credit card.

The printer 20 is provided, for example, inside a housing of the main body 11. The printer 20 is a printing device that prints a receipt showing details of a transaction or a coupon such as discount of a commodity on receipt paper or the like. The printer 20 includes a receipt discharge section on a front surface of the main body 11. The receipt discharge section is a discharge port that discharges a receipt or the like dispensed by the printer 20 to the outside of the self-service POS terminal 10. The receipt discharge section is provided, for example, between the cash reception and discharge section 15 and the scanner 16 in the main body 11.

The camera 21 is a camera positioned to image a range in which an operator of the self-service POS terminal 10 stands. The camera 21 includes an imaging element such as a CMOS or a CCD. Image data obtained by camera 21 is used for analysis processing performed by an image processing unit for detection of non-standard events.

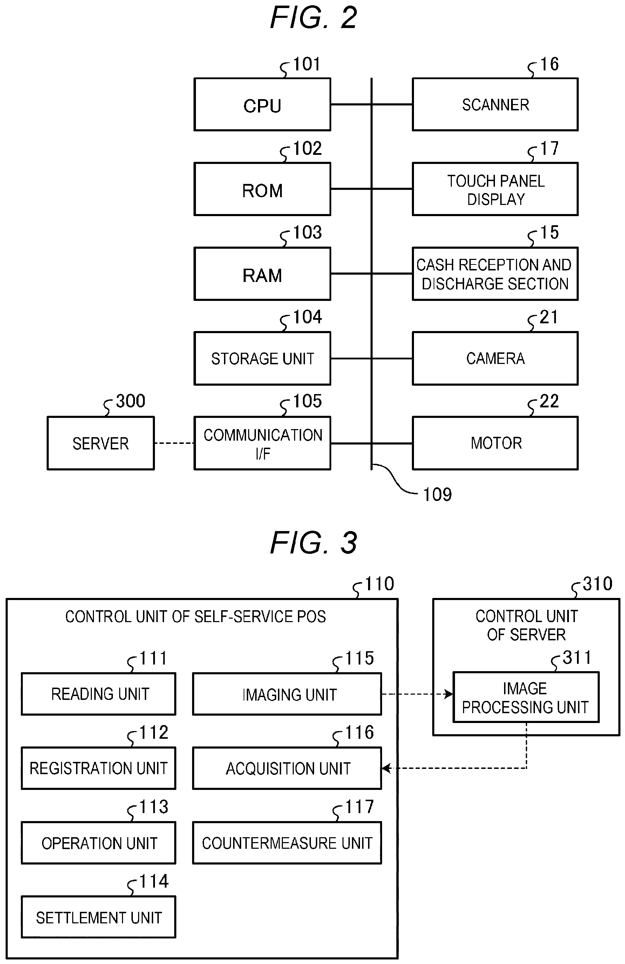

Fig. 2 is a diagram illustrating an example of a hardware configuration of the self-service POS terminal 10 according to an embodiment. The self-service POS terminal 10 further includes a motor 22, a central processing unit (CPU) 101, a read only memory (ROM) 102, a random access memory (RAM) 103, a storage unit 104, and a communication interface (I/F) 105.

The measuring section 14, the cash reception and discharge section 15, the scanner 16, the touch panel display 17, the indicator lamp 18, the card reader 19, the printer 20, the camera 21, the motor 22, the CPU 101, the ROM 102, the RAM 103, the storage unit 104, and the communication I/F 105 are connected to each other via a system bus 109 such as a data bus and/or an address bus.

The motor 22 (a drive unit that changes an imaging direction of the camera 21) is operated and rotated by electric power, and the rotation is transmitted to a support part that supports the camera 21 such that orientation of the camera 21 is adjustable. An imaging angle of the camera 21 can be changed by controlling the motor 22. When the orientation of the camera 21 changes, the range to be imaged changes.

The storage unit 104 is a storage device such as a hard disk drive (HDD), a solid-state drive (SSD), or a flash memory. The storage unit 104 stores a control program, a commodity master, and the like. The control program can be a program for implementing various functions of the self-service POS terminal 10. Such a control program may operate in conjunction with an operating system.

The commodity master stores information about a commodity (commodity information) in correlation with a commodity code that is identification information enabling identification of the commodity. The commodity information is, for example, a name, a price, and/or a weight value of a particular commodity. When object recognition processing is to be executed in the self-service POS terminal 10, information for collation feature data may be included in the commodity information and may be correlated with information in the commodity master. The collation feature data is information related to an appearance feature of the commodity permitting identification by image analysis or the like. The collation feature data is obtained by parameterizing appearance features such as a standard shape, a surface hue, a pattern, and a state of unevenness of the commodity surface or the like.

The CPU 101 is a processor. The ROM 102 is a storage medium that stores various types of programs and data. The RAM 103 is a storage medium that temporarily stores various types of programs and various types of data. The CPU 101 uses the RAM 103 as a work area to execute various types of programs stored in the ROM 102 or the storage unit 104 to implement a control unit 110 (see FIG. 3). The control unit 110 controls each sub-unit of the self-service POS terminal 10.

A processor for the control unit 110 is not limited to a CPU, and other processor types such as a graphics processing unit (GPU), an application specific integrated circuit (ASIC), and a field programmable gate array (FPGA) may be used.

The communication I/F 105 is an interface for the self-service POS terminal 10 to communicate with an external device via a network.

An example of an external device is a server 300. The server 300 is a computer or the like including a CPU, a ROM, a RAM, a storage unit, and the like. The CPU (processor) of the server 300 functions as a control unit 310 (see FIG. 3) by executing a program stored in the ROM or the storage unit.

As another external device in this context, , there may be an information processing apparatus (hereinafter, referred to as a management apparatus) operated by a manager (store manager) or attendant such as a store clerk monitoring the self-service POS terminal 10. The management apparatus is, for example, a personal computer (PC), a tablet terminal, or a smartphone. The management apparatus can be connected to a plurality of self-service POS terminals 10. In some examples, a self-service POS terminal 10 in a plurality of self-service POS terminals 10 connected to each other via a network may be used as a management apparatus in some instances. The management apparatus notifies the store clerk (manager) of a fraud detection based on information (notices) from a self-service POS terminal 10.

As another external device in this context, there may be an image processing apparatus that performs image processing (analysis) such as object recognition processing or the like.

FIG. 3 is a diagram illustrating functional aspects of the self-service POS terminal 10 and the server 300 according to an embodiment.

The control unit 110 of the self-service POS terminal 10 functions as a reading unit 111, a registration unit 112, an operation unit 113, a settlement unit 114, an imaging unit 115, an acquisition unit 116, and a countermeasure unit 117 in this example. The control unit 310 of the server 300 functions as an image processing unit 311 in this example.

A part or all of the functions described as implemented by the control unit 110 in the present embodiment may be implemented in cooperation with an external device or may be implemented by a dedicated hardware configuration such as a dedicated circuit mounted on the self-service POS terminal 10.

The reading unit 111 reads a commodity code from a wireless tag or a code symbol such as a bar code attached to a commodity through the scanner 16, and outputs the commodity code. The reading unit 111 may specify (identify) the commodity by object recognition based on image data obtained by imaging of a camera of the scanner 16.

The registration unit 112 acquires information (commodity information) from the commodity master based on the commodity code output by the reading unit 111, and registers the acquired commodity information in the sales transaction. Here, the registration means storing the acquired commodity information in a predetermined storage area (for example, provided in the storage unit 104) as sales data or transaction information. The registration unit 112 may also register a commodity specified by input to the touch panel display 17 (manual input) without requiring the commodity information output by the reading unit 111.

The operation unit 113 receives an input operation performed by an operator. More specifically, in this example, the operation unit 113 outputs a signal corresponding to an input received by the touch panel display 17.

The settlement unit 114 performs processing (settlement processing) related to settlement of the commodities registered by the registration unit 112. For example, the settlement unit 114 calculates a total price of commodities registered by the registration unit 112. Further, the settlement unit 114 calculates change due by subtracting the total price from the amount of cash inserted into the cash reception and discharge section 15. Then, the settlement unit 114 causes the cash reception and discharge section 15 to discharge the change as coins or bills.

The imaging unit 115 uses the camera 21 to image a range in which an operator of the self-service POS terminal 10 is generally present. More specifically, imaging unit 115 controls the camera 21 and outputs (transmits) the captured image(s) from camera 21 to the server 300 or the like. The range for camera 21 at least includes a region in front of the self-service POS terminal 10 near the touch panel 17.

The image processing unit 311 of the server 300 executes processing (analysis processing) of analyzing the captured image(s) from the camera 21. In the analysis processing, the image processing unit 311 analyzes the captured image using certain feature points and determines whether the imaging direction has shifted from a reference position based on a result (analysis result). The image processing unit 311 outputs (transmits) information indicating the determination result to the self-service POS terminal 10.

An image analysis using feature points will be schematically described. For extraction and comparison of feature points, a scale-invariant feature transform (SIFT) can be used. The extraction and comparison of the feature points may also or instead be performed by another method such as template matching or deep learning.

In the analysis processing, the image processing unit 311 first selects feature points at a plurality of positions from a captured image and records feature data such as point coordinates and a pattern of the feature points. Captured images provide for analysis processing include an image serving as a reference (reference image) and an image captured during operation (operation image). The reference image is an image captured at the time of installation of the self-service POS terminal 10 or an image captured upon activation of the self-service POS terminal 10 before opening of a store. In addition, operation image can be any image captured during registration processing or settlement processing at the self-service POS terminal 10.

Next, the image processing unit 311 compares feature data (such as point coordinates and a pattern of feature points) extracted from the reference image with feature data extracted from an operating image. The image processing unit 311 attempts to perform collation (matching) of feature points in the two images. In the collation of the present example, the image processing unit 311 identifies a degree of similarity between the patterns to a numerical value (similarity), and determines those feature points having a high similarity to be corresponding ones in the two images.

Next, the image processing unit 311 determines whether the coordinates of the determined corresponding feature points determined are different between the reference image and the operation image, and, if the feature point coordinates are different, determines the degree of difference.

For example, the image processing unit 311 determines whether the difference between positions of the coordinates of corresponding feature points exceeds a threshold. The threshold can be set as a value appropriate for allowing a limited amount of normal or inconsiderable shifting to occur without triggering concern. The threshold can be set in advance and stored in a predetermined storage area (for example, the storage unit 104). If the difference between the positions of the coordinates of the feature points exceeds the preset threshold, the image processing unit 311 determines that the orientation of the camera 21 has shifted.

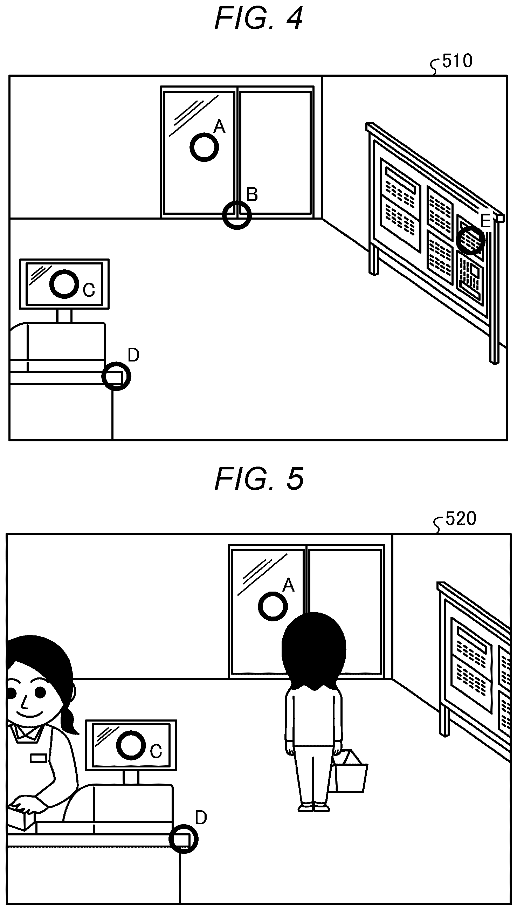

FIGS. 4 and 5 are diagrams illustrating an example of a captured image of the camera 21 according to an embodiment. FIG. 4 illustrates an example of a captured image 510 serving as a reference (reference image). FIG. 5 illustrates an example of a captured image 520 captured during operation (operation image). Portions of the store are visible in the captured images 510 and 520 illustrated in FIGS. 4 and 5. The captured image 520 (operation image) shows a range slightly to the left of that in the captured image 510 (reference image). That is, the orientation of the camera 21 has slightly shifted to the left from that of the reference during operation.

As illustrated in FIG. 4, it is assumed that feature points A to E are identified in the captured image 510 serving as a reference. In addition, as illustrated in FIG. 5, feature points A, C, and D corresponding to those in the captured image 510 are identified in the captured image 520. In the allocation of the feature points, it is not necessary that all feature points included in the captured image 510 (reference image) are included in the captured image 520, and it is sufficient that some feature points included in the captured image 510 (reference image) are included in the captured image 520.

In this case, a difference in positions of coordinates of the feature points A, C, and D between the captured images 510 and 520 is calculated and compared to the threshold. When the difference exceeds the threshold, it can be determined that the difference is beyond the allowable limit for a shift, and the image processing unit 311 determines that the imaging direction of the camera 21 has shifted from the reference position. The image processing unit 311 can detect the shift of the camera 21 by analyzing the captured images of the camera 21.

The image processing unit 311 transmits information indicating whether the imaging direction of the camera 21 has shifted from the reference to the self-service POS terminal 10.

Returning to FIG. 3, by receiving, from the server 300, a determination result output by the image processing unit 311, the acquisition unit 116 acquires the information indicating whether the imaging direction of the camera 21 has shifted from the reference. When the imaging direction has shifted from the reference position, the acquisition unit 116 outputs information (a signal) for requesting a countermeasure to the countermeasure unit 117.

When the acquisition unit 116 acquires the information indicating that the camera 21 has shifted from the reference position, the countermeasure unit 117 performs countermeasure processing for preventing a fraudulent operation of an operator. In the countermeasure processing, specifically, the countermeasure unit 117 executes, for example, the following.

The countermeasure unit 117 stops the progress of the registration processing performed by the registration unit 112 and the progressing of the settlement processing performed by the settlement unit 114. More specifically, the countermeasure unit 117 disables execution of the registration processing if the registration processing performed by the registration unit 112 is not executed, and temporarily suspends or stops the registration processing if the registration processing performed by the registration unit 112 is being executed. In addition, the countermeasure unit 117 disables execution of the settlement processing if the settlement processing performed by the settlement unit 114 is not executed, and temporarily suspends or stops the settlement processing if the settlement processing performed by the settlement unit 114 is being executed.

In addition, the countermeasure unit 117 transmits a notification indicating that the imaging direction of the camera 21 has shifted to a device (management apparatus) that can be checked by a store clerk. The store clerk receiving this notification takes measures as necessary.

Further, the countermeasure unit 117 may control the motor 22 to change the imaging direction of the camera 21 so as to return to the reference position.

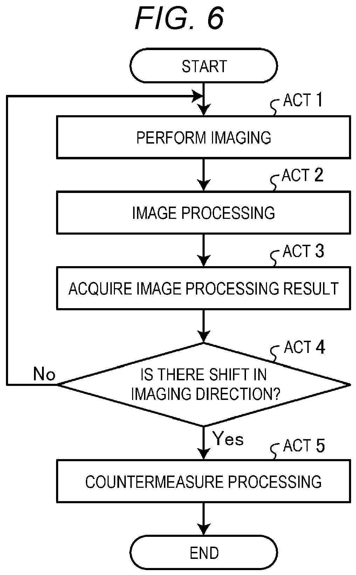

Hereinafter, a flow of processing executed by the self-service POS terminal 10 according to the embodiment will be described with reference to the drawings. FIG. 6 is a flowchart illustrating an example of processing executed by the self-service POS terminal 10 according to the embodiment.

When the camera 21 performs imaging (ACT 1), the control unit 110 shifts to the image processing (ACT 2). In the present embodiment, since the image processing is performed by the server 300, the control unit 110 outputs a captured image to the server 300.

Next, the control unit 110 acquires a result of the image processing (ACT 3). In the present embodiment, since the image processing is performed by the server 300, the control unit 110 receives an image processing result from the server 300. The image processing result is a result of analysis by the image processing, and is information indicating, as a specific example, that the imaging direction of the camera 21 has shifted from the reference.

Next, the control unit 110 determines whether there is a shift in the imaging direction of the camera 21 based on the information acquired in ACT 3 (ACT 4). When it is determined that there is no shift (No in ACT 4), the control unit 110 returns the processing to the beginning.

When it is determined that there is a shift in the imaging direction of the camera 21 in ACT 4 (Yes in ACT 4), the control unit 110 performs the countermeasure processing (ACT 5). In the countermeasure processing, for example, the control unit 110 (countermeasure unit 117) stops the progress of the registration processing performed by the registration unit 112, stops the progress of the settlement processing performed by the settlement unit 114, and further transmits a notification to the management apparatus.

The registration processing and the settlement processing are resumed, for example, in response to a stop release operation of a store clerk who confirmed the self-service POS terminal 10. In addition, in a case where the control unit 110 (countermeasure unit 117) does not control the motor 22 to automatically correct the imaging direction of the camera 21, a store clerk who comes to confirm the self-service POS terminal 10 performs an operation of resuming the registration processing and the settlement processing after manually correcting the imaging direction of the camera 21.

According to the embodiment as described above, when the imaging direction of the camera 21 is changed from a reference imaging direction, the change can be detected to determine an abnormality. In addition, according to the above embodiment, when an imaging content of the camera 21 is abnormal, it is possible to fix the progress of the registration processing and the settlement processing, and thus it is possible to prevent an occurrence of inconvenience in sales data processing. Accordingly, it is possible to appropriately detect an operation error and a fraudulent act by using the camera 21.

In the above embodiment, the image processing unit 311 outputs, to the acquisition unit 116, information indicating a result of determination as to whether the imaging direction has shifted from the reference. In implementation, the image processing unit 311 may output other types of information as follows.

For example, instead of the determination result, the image processing unit 311 may output information indicating a result (analysis result) of analyzing a captured image to the self-service POS terminal 10. In this case, the acquisition unit 116 of the self-service POS terminal 10 determines whether the imaging direction has shifted from the reference based on the analysis result.

In some examples, the image processing unit 311 may output information indicating that the imaging direction has shifted from the reference only after it is determined that the imaging direction has shifted from the reference. That is, information indicating that the imaging direction of the camera 21 has not shifted from the reference may be excluded from information output to the acquisition unit 116.

The image processing unit 311 may be provided in the self-service POS terminal 10 itself.

In an embodiment, a self-service POS terminal 10 including just one camera 21 has been described as an example. In other examples, a sales data processing apparatus and a payment apparatus may include two or more cameras 21. In this case, the technique of the above-described embodiment may be applied to all of the cameras 21, or may be applied to less than all of the cameras 21.

In the sales data processing apparatus and the payment apparatus including two or more cameras 21, imaging ranges of the different cameras 21 to be different from each other. For example, one camera images the hand(s) of the operator, another camera images the face of the operator, and another camera images the store surroundings. Also in such a case, for each camera 21, it is possible to determine presence or absence of a shift of the camera 21 by preparing the captured image 510 (reference image) and analyzing the captured image 520 (operation image) in comparison.

If the camera 21, the imaging unit 115, and the motor 22 constitute a separate monitoring camera that is not integral with the self-service POS terminal 10, the countermeasure processing to be performed by the countermeasure unit 117 may be similarly performed.

The self-service POS terminal 10 of an embodiment includes the cash reception and discharge section 15. Alternatively, for example, when the self-service POS terminal 10 is configured as a cashless terminal that does not handle cash, the cash reception and discharge section 15 need not be provided.

The above-described embodiment can be modified and implemented by changing various aspects of the configuration or function of the above-described devices. Various modifications and the like may be incorporated into an implementation and differences in these modifications from the above-described embodiment will be described. Aspects which are substantially similar to the already described embodiment may be omitted from additional description of the modification(s), but the same reference symbols will be used for such aspects. Furthermore, the described modifications may be implemented individually or in combination with one another as appropriate.

### Second Embodiment

In the second embodiment, an example in which a technique of the first embodiment is applied to a semi-self-service-type POS terminal (hereinafter, referred to as a semi-self-service POS terminal) will be described. The semi-self-service POS terminal is an apparatus with which a shopper performs an operation related to settlement processing after commodity registration has been performed and is an example of a payment apparatus.

In the second embodiment, the registration processing is performed, for example, by a store clerk at a standard POS terminal. In some examples, the registration processing may be performed by the shopper himself/herself at a dedicated registration terminal or via a smartphone application of the like. For example, the shopper performs registration of a commodity by an operation of the shopper on a POS application activated on a smartphone possessed by the shopper (smartphone POS), or by an operation of the shopper on a cart POS (a terminal attached to a cart equipped in a store).

The semi-self-service POS terminal generally lacks the scanner 16, the reading unit 111, the registration unit 112, found in the self-service POS terminal 10. Alternatively, in some examples, a self-service POS terminal 10 may be operated as a semi-self-service POS terminal by setting those components (the scanner 16, the reading unit 111, the registration unit 112, and the like) in the self-service POS terminal 10 to a non-operating state.

In second embodiment, the control unit 110 functions as indicated in the flowchart shown in FIG. 6. In countermeasure processing (ACT 5), the control unit 110 stops the progress of the settlement processing being performed by the settlement unit 114, and further as necessary, transmits a notification to the management apparatus and/or automatically corrects an imaging direction of the camera 21 by controlling the motor 22.

In second embodiment, similarly to the first embodiment, it is possible to prevent an occurrence of inconvenience in sales data processing when imaging content of the camera 21 for detecting an operation error and a fraudulent act is abnormal.

The programs executed by respective devices in the above-described embodiments may be considered to have a modular configuration for providing the above-described units (the reading unit 111, the registration unit 112, the operation unit 113, the settlement unit 114, the imaging unit 115, the acquisition unit 116, the countermeasure unit 117, and the image processing unit 311) as necessary. A CPU (processor) loads the modules as necessary by reading and then executing the programs from a storage medium. Accordingly, the reading unit 111, the registration unit 112, the operation unit 113, the settlement unit 114, the imaging unit 115, the acquisition unit 116, the countermeasure unit 117, and the image processing unit 311 are generated.

Such programs can be provided by being incorporated into a ROM or the like in advance. The programs may also or instead be provided by being recorded in a non-transitory computer-readable recording medium such as a CD-ROM, a flexible disk (FD), a CD-R, or a digital versatile disk (DVD) as a file in an installable format or an executable format.

Further, the programs may also be stored in a computer connected to a network such as the Internet and provided by being downloaded via the network. The programs may also or instead be accessed or distributed via a network such as the Internet.

While certain embodiments have been described, these embodiments have been presented by way of examples only, and are not intended to limit the scope of the present disclosure. These novel embodiments may be implemented in a variety of other forms; various omissions, substitutions, changes, and combination may be made without departing from the gist of the present disclosure. The embodiments and the modifications thereof fall within the scope of the present disclosure and are included in the scope of the present disclosure recited in the claims and the equivalent thereof.

## Claims

1. A sales data processing apparatus, comprising:
a camera positioned to acquire images of a region in which a user of the sales data processing apparatus operates the sales data processing apparatus;
a user input unit permitting the user to operate the sales data processing apparatus; and
a controller configured to:
perform registration processing on items in a sales transaction based on item information acquired by the controller;
acquire a first image from the camera as a reference image;
acquire a second image from the camera after the first image;
acquire an image analysis comparing the first image to the second image to determine whether an imaging range of the camera has shifted between the acquisition of the first image and the second image; and
perform a countermeasure processing if the image analysis indicates the imaging range has shifted between the acquisition of the first image and the second image.

2. The sales data processing apparatus according to claim 1, wherein the controller is further configured to perform settlement processing for the sales transaction based on the items registered in the registration processing.

3. The sales data processing apparatus according to claim 2, wherein the countermeasure processing stops the registration processing or the settlement processing.

4. The sales data processing apparatus according to claim 2 or 3, wherein the countermeasure processing includes transmitting a notification to an external device.

5. The sales data processing apparatus according to any one of claims 1 to 4, further comprising:
a motor for positioning the camera, wherein
the countermeasure processing includes controlling the motor to return the camera to a position before the shift.

6. The sales data processing apparatus according to any one of claims 1 to 5, wherein the image analysis is performed by an external device and acquired via a network connection.

7. The sales data processing apparatus according to any one of claims 1 to 6, further comprising:
an item scanner configured to obtain item information from an item in the sales transaction.

8. The sales data processing apparatus according to claim 7, further comprising:
a currency handling unit configured to receive payments for the items registered in the sales transaction.

9. A payment processing apparatus, comprising:
a camera positioned to acquire images of a region in which a user of the payment processing apparatus operates the payment processing apparatus;
a user input unit permitting the user to operate the payment processing apparatus; and
a controller configured to:
perform settlement processing on items registered in a sales transaction based on item information acquired by the controller;
acquire a first image from the camera as a reference image;
acquire a second image from the camera after the first image;
acquire an image analysis comparing the first image to the second image to determine whether an imaging range of the camera has shifted between the acquisition of the first image and the second image; and
perform a countermeasure processing if the image analysis indicates the imaging range has shifted between the acquisition of the first image and the second image.

10. The settlement processing apparatus according to claim 9, wherein the controller is further configured to perform registration processing for registering the items in the sales transaction.

11. The settlement processing apparatus according to claim 9 or 10, wherein the countermeasure processing stops the settlement processing.

12. The settlement processing apparatus according to any one of claims 9 to 11, wherein the countermeasure processing includes transmitting a notification to an external device.

13. The settlement processing apparatus according to any one of claims 9 to 12, further comprising:
a motor for positioning the camera, wherein
the countermeasure processing includes controlling the motor to return the camera to a position before the shift.

14. A non-transitory, computer-readable medium storing program instructions which when executed by a sales data processing apparatus causes the apparatus to perform a method comprising:
acquiring item information for items in a sales transaction;
performing registration processing on the items in a sales transaction based on the acquired item information acquired;
acquiring a first image from a camera as a reference image;
acquiring a second image from the camera after the first image;
acquiring an image analysis comparing the first image to the second image to determine whether an imaging range of the camera has shifted between the acquisition of the first image and the second image; and
performing a countermeasure processing if the image analysis indicates the imaging range has shifted between the acquisition of the first image and the second image.

15. The non-transitory, computer-readable medium according to claim 14, wherein the countermeasure processing includes controlling the motor to return the camera to a position before the shift.
